# EUROPEAN PATENT APPLICATION

(11) **EP 3 800 213 A1**
(43) Date of publication of application: **07.04.2021**
(21) Application number: 19382845.6
(22) Date of filing: 01.10.2019
(51) Int. Cl.: C08G 18/80, C08G 18/28, C08G 18/70, C08G 18/76, C09D 175/04, C08G 18/32

(54) **BLOCKED ISOCYANATE POLYURETHANE COMPOSITIONS USING A NEW BLOCKING AGENT, METHOD OF MANUFACTURE AND USES THEREOF**

(71) Applicant: Cromogenia Units, S.A., 46980 Paterna (ES); Universitat Rovira I Virgili, 43003 Tarragona (ES)
(72) Inventor: GUILLEM PARRA, Maite, 46980 PATERNA (ES); GALIÀ CLUA, Marina, 43003 TARRAGONA (ES); LLIGADAS PUIG, Gerard, 43003 TARRAGONA (ES)
(74) Representative: Ponti & Partners, S.L.P

(57) **Abstract**

The present invention relates to a new blocking agent for a blocked isocyanate composition consisting of an oxime of an ester of gamma-cetoacid. The present invention also relates to a method of manufacturing a blocked isocyanate composition and to a method of deblocking a blocked isocyanate composition. The present invention relates to the use of the blocked isocyanate composition obtained for manufacturing synthetic or artificial leather or in textile applications.

## Description

### Field of the invention

The present invention relates to the field of polyurethanes. In particular the present invention relates to a new blocking agent for a blocked isocyanate composition. The present invention also relates to a method of manufacturing or deblocking said blocked isocyanate composition and the use thereof.

### Background art

Blocked polyurethanes are those in which free isocyanate groups are blocked with a protective or blocking agent. This blocked polyurethane will dissociate on heating to remove the protecting or blocking agent and release the reactive isocyanate group.

This deblocking reaction occurs at a given temperature and below this temperature, the isocyanate is in a blocked form that decreases the isocyanate reactivity and toxicity.

Nowadays, blocked polyurethanes are commonly used in many applications such as coatings, textile, automotive, leather,.... with the purpose of curing by chain extension or crosslinking in one component formulations. There are two main types of blocked polyurethanes: water based polyurethanes and high solid polyurethanes.
a) Water based polyurethanes containing blocked isocyanate groups can be used in textile as crosslinking agents in chemical finishing to provide properties in dyeing and printing processes in order to improve colour fastness, as formaldehyde based products.
b) The technology of high solid polyurethanes can be widely used for manufacturing coatings for textile, for example in synthetic leather such as leather clothes, leather luggage, leather sofas, and so on. The synthetic leather manufacturing technology based on blocked isocyanates has the advantage of eliminating the use of solvents and consuming less energy in regard to the conventional solvent born polyurethanes. It can be also used in coatings for pipes, for example for pipe or sewer lines repair.

Blocked PU reactive systems of blocked NCO-prepolymers which are then deblocked on heating are known. Examples of these type of urethane systems can be found in: U.S Pat. Nos. 4,794,154; 6,080,812; WO 2006/029141 A1.

Firstly a NCO-prepolymer is produced by reacting an excess of polyisocyanate with polyols (Scheme 1). Then the free NCO groups are blocked with a blocking agent, which usually is a hydrogen active compound, so that there is no free NCO groups (Scheme 2).

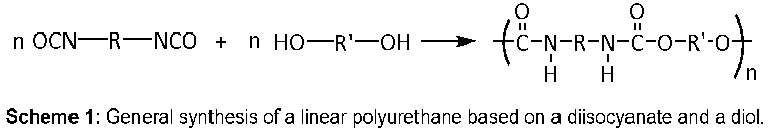

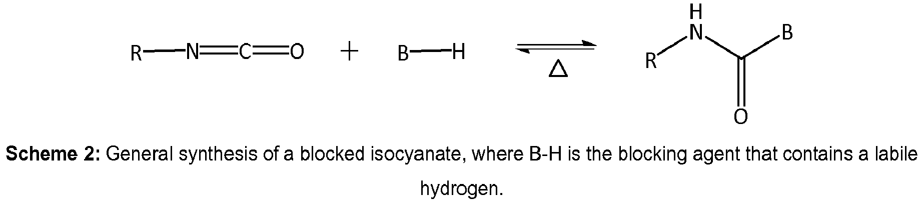

Since it is an equilibrium, this reaction tends to regenerate the isocyanate group at elevated temperature (Scheme 2). Then, the free isocyanate reacts with a nucleophile to form thermally more stable bonds.

The deblocking temperature of dissociation relies on the structure of the isocyanate and of the blocking molecule. Because only a few isocyanates are industrially available, this temperature is mainly controlled through the blocking molecule structure.

Currently these agents are alcohol, phenol, amine (for example, diisopropylamine), imidazole, pyrazole (for example, 3,5-dimethylpyrazole), malonic esters, caprolactames or oximes. However, the most used agent in the industry and easily found in bibliography is butanone oxime.

In general, a film made of this blocked polyurethane is applied over a substrate and then this film goes into an oven in order to reach the deblocking temperature. When this temperature is achieved, the blocking agent is released and the NCO groups become free again, so that they can react with amines, water or any nucleophile group present in the system. Usually, since the deblocking temperature is close to the boiling point, the blocking agent is released to the atmosphere.

The present problem with the blocking agents currently used is their toxicity and even the most used agent (butanone oxime or also named as methyl ethyl ketoxime) is legally classified for carcinogenicity as carcinogen category 2 according to the CLP Regulation.

Accordingly, there is the need to find further alternatives to blocking agents with less toxicity and bio-based. This need is fulfilled with the present invention.

### Summary of the invention

In a first aspect, the present invention relates to a new blocking agent for a blocked isocyanate composition consisting of an oxime of an ester of gamma-cetoacid, preferably levulinic acid.

In a second aspect, the present invention relates to a method of manufacturing a blocked isocyanate composition.

In a third aspect, the present invention relates to a method of deblocking a blocked isocyanate composition.

In a four aspect, the present invention relates to the use of the blocked isocyanate composition obtained according to the second aspect of the invention for manufacturing synthetic or artificial leather or in textile applications.

### Detailed description of the invention

In a first aspect, the present invention relates to a new blocking agent for a blocked isocyanate composition consisting of an oxime of an ester of gamma-cetoacid,
wherein this ester is formed with an optionally substituted alkyl group, and
wherein said blocking agent blocks an isocyanate group by forming an urethane group.

The term "blocked isocyanate composition" can be also named as a blocked polyurethane, understanding polyurethane as a polymer composed or organic units joined by urethane links commonly formed by reacting isocyanate groups with hydroxyl groups.

The term "alkyl" as used herein refers to saturated straight, branched, cyclic, primary, secondary or tertiary hydrocarbons, including those having 1 to 10 atoms. In some embodiments, alkyl groups will include C1-C10, C1-C9, C1-C8, C1-C7, C1-C6, C1-C5, C1-C4, C1-C3 or C1-C2 alkyl groups. Examples of C1-C10 alkyl include, but are not limited to, methyl, ethyl, propyl, 1-methylethyl, butyl, 1-methylpropyl, 2-methylpropyl, 1,1-dimethylethyl, pentyl, 1-methylbutyl, 2-methylbutyl, 3-methylbutyl, 2,2-dimethylpropyl, 1-ethylpropyl, hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, heptyl, octyl, 2-ethylhexyl, nonyl and decyl and their isomers. As another example, C1-C4 alkyl means include, but are not limited to, methyl, ethyl, propyl, 1-methylethyl, butyl, 1-methylpropyl, 2-methylpropyl or 1,1-dimethylethyl.

In a preferred embodiment, the gamma-cetoacid is levulinic acid.

In another preferred embodiment, the alkyl group is selected from methyl, ethyl, propyl, butyl, pentyl and hexyl.

Accordingly, the new blocking agent is the oxime of a molecule containing both a ketone or an aldehyde group and an ester group. C₃-C₈ esters containing ketone groups are preferred such as, 2-oxopropanoic acid methyl ester, 2-oxopropanoic acid ethyl ester, 3-oxobutanoic acid methyl ester, 3-oxobutanoic acid ethyl ester, 4-oxopentanoic acid methyl ester, 4-oxopentanoic acid ethyl ester, 5-oxohexanoic acid methyl ester and 5-oxohexanoic acid ethyl ester, 4-oxohexanoic acid methyl ester, 4-oxohexanoic acid ethyl ester. Particularly 4-oxopentanoic acid methyl ester, also called methyl levulinate is preferred.

Furthermore, the acid form of these esters could be used, for example the oxime of levulinic acid and the oxime of pyruvic acid; however they can compete with the oxime in the reaction with the isocyanate, and then the blocking reaction would not be performed completely.

In 2004, the Biomass Program of the US Department of Energy listed levulinic acid as one of the most promising value-added bio-derived chemicals. It is classified as a Biobased Chemical Building Block (BCBB). A Chemical Building Block (CBB) is a molecule which can be converted into various secondary chemicals and intermediates, and, therefore, can give rise to a broad range of different downstream uses. When this molecule derived from biomass, it can be called BCBB.

The controlled degradation of C6-sugars by acids is the most widely used approach to prepare levulinic acid from lignocellulosic biomass. Other methods have also been studied, for instance, the hydrolysis of acetyl succinate ester, the acid hydrolysis of furfuryl alcohol and the oxidation of ketones. However, these methods require expensive raw materials and result in relatively high amounts of by-products.

Levulinic acid contains a carbonyl and a carboxyl group and hence can take part in reactions such as oxidation, reduction, esterification, substitution, and condensation that make it a valuable chemical platform.

The preferred blocking agent of the present invention, the oxime of levulinic acid methyl ester, could be synthetized by the reaction of the ketone group with hydroxylamine hydrochloride or with hydroxylamine sulfate in basic medium. After extraction and distillation of the solvent, yields of 90-100% were obtained.

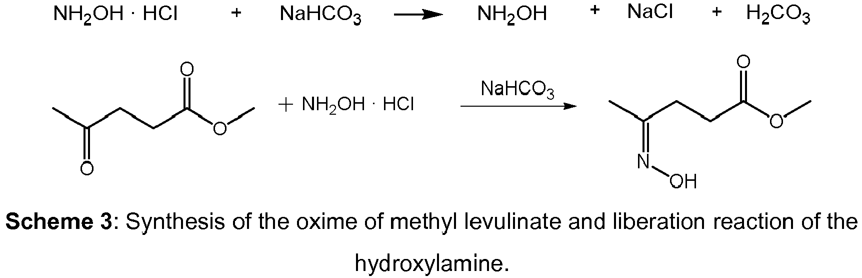

In a second aspect, the present invention relates to a method of manufacturing a blocked isocyanate composition comprising the steps of:
a) reacting at least one isocyanate compound with at least one polyol compound for forming urethane groups;
b) adding the blocking agent as defined in the first aspect of the invention, including all the embodiments thereof, to block free isocyanates groups.

Polyurethanes that contain blocked isocyanate groups are usually prepared with:
A) Relatively high molecular weight, difunctional to tetra-functional and preferably difunctional to trifunctional polyhydroxyl compounds having a molecular weight of from about 500 to 10,000 Da and preferably from about 1000 to 6000 Da. They can be polyethers, such as polytetramethylene ether, but preferably polyoxypropylene polyethers which may also contain polyoxyethylene units in block, mixed or terminal form, and also polyesters preferably from adipic acid and the polythioethers, polycarbonates, polyacetals or lactone polyesters otherwise normally used as well as their mixtures or even co-condensation products containing ether, ester, amide, carbonate or acetal groups. High molecular weight monofunctional alcohols from about 500 to 5000 Da such as polyether polyols based on ethylene oxide or propylene oxide or a combination of both could also be used. Polyhydroxyl compounds containing high molecular weight polyadducts or polycondensates or vinyl polymers in finely dispersed or even dissolved form may be used, optionally in admixture with unmodified polyols, as relatively high molecular weight polyhydroxyl compounds.
B) Low molecular weight polyols having a molecular weight of from 50 to 500 and preferably from 62 to about 250 of the type known per se as chain-extending agents may also be used in the production of the NCO pre-polymers according to the invention, preferred compounds of this type are 1,4- or 2,3- or 1,3-butane diol, diethylene glycol, or trimethylol propane.
C) The polyisocyanates used to prepare the blocked isocyanates may be monomeric in nature or adducts containing biuret, allophanate, urea, urethane or carbodiimide or isocyanurate groups. Suitable polyisocyanates which may be used as such or as intermediates for preparing adducts include: aromatic isocyanates such as diphenyl methane diisocyanates in the form of their (4,4'-), (2,4'-) and/or (2,2'-) isomers or mixtures thereof and also isomeric tolylenediisocyanates or mixtures of these isocyanates; and aliphatic isocyanates such as: isophorone diisocyanate, 1,6-hexamethylene diisocyanate or 4,4'-methylenebis(ciclohexyl isocyanate) and its isomers. Also adducts of these aliphatic isocyanates can be used, for water based blocked polyurethanes isocyanurate of hexamethylene diisocyanate is preferred.
D) The NCO-prepolymers are produced in known manner by reacting the above-mentioned polyhydroxyl compounds with excess diisocyanates, preferably at an NCO/OH molar ratio of from about 1.5:1.0 to 20.0:1.0, in high solids polyurethanes a NCO/OH molar ratio from 2:1 to 6:1 is preferred. In water based blocked polyurethanes a NCO/OH molar ratio between 5:1 and 15:1 is preferred.

The polyurethanes may also contain standard additives, such as dyes and pigments, thickeners, UV-absorbers, antioxidants, light or heat stabilizers and even standard polyurethane catalysts.

The blocked NCO-prepolymers are generally mixed with the polyamine crosslinker in approximately stoichiometric amounts although deviation from the stoichiometric ratio is also possible. Therefore, according to the invention the equivalent ratio of blocked NCO to NH₂ is generally between about 1.3:1.0 and 0.95:1.00, preferably between about 1.25:1.00 and 0.97:1.00 and more preferably between about 1.10:1.00 and 0.98:1.00. Accordingly, excesses of NCO may be used: whereas, excess amino groups are only tolerable within relatively narrow limits in order to avoid any adverse effect upon the properties.

In a preferred embodiment, the method according to the second aspect can be carried out by adding a suitable catalyst.

In a preferred embodiment, the blocking agent is added together with at least one of the following: alcohol-, phenol-, amine-, imidazole-, pyrazole-, malonic esters-, caprolactame- and oxime-type blocking agent.

In another preferred embodiment, the blocking agent is present in a stoichiometric ratio with respect to the isocyanate compound. However, a non-stoichiometric ratio can also be used, i.e. the blocking agent can be present in a ratio under or above the stoichiometric ratio with respect to the isocyanate compound. Blocking is carried out by reacting the NCO prepolymer with substantially stoichiometric quantities of the blocking agent until the NCO groups have disappeared. Nevertheless, although less preferably, the blocking agent can be in amount lower or higher than the stoichiometric ratio. It is also possible to use blocked NCO-prepolymers in which not all the NCO-groups are blocked, i.e. in which about 1 to 25% of the NCO groups are still free.

In another preferred embodiment, the method according to the second aspect is carried out without solvents or up to 50 wt% of organic solvents, preferably with up to about 10% by weight, with respect to the whole composition. By way of example, said solvent can be methoxy propyl acetate.

In an alternative preferred embodiment, the method according to the second aspect is carried out with water or a combination of water and a polar organic solvent as solvent. By way of example, said solvent can improve the dispersability in water of water-based blocked isocyanates. Examples thereof are n-ethylpirrolidone, dipropylene glycol dimethyl ether and methoxypropyl acetate.

In a third aspect, the present invention relates to a method of de-blocking a blocked isocyanate composition comprising the step of removing the blocking agent according to the first aspect of the invention, including all the embodiments thereof.

In a preferred embodiment, said removal is carried out by the action of nucleophilic groups. More preferably, the nucleophilic groups are alcohol- or amine-type nucleophilic groups.

The amine-type nucleophilic groups for the blocked NCO polyurethanes are selected from substantially non-volatile aliphatic and/or cycloaliphatic polyamines, preferably (cyclo)aliphatic diamines which are liquid at room temperature and have a low vapor pressure, especially those having a lower vapor pressure than 1,6-hexanediamine. Particularly preferred groups are 3-(aminomethyl)-3,5,5-trimethylcyclohexan-1-amine or dicyclohexyl methane diamines, particularly alkyl-substituted diaminodicyclohexylmethanes, such as for example 4,4'-diamino-3,3'-dimethyldicyclohexylmethane,4,4'-diamino-3,3'-diethyldicyclohexylmethane, 4,4'-diamino-3,3'-diisopropyldicyclohexyl methane or asymmetrically alkyl-substituted 4,4'-diamino-di-,-tri- or-tetra-alkyl cyclohexyl methanes, such as for example product mixtures of 3,5-diethyl-3',5'-diisopropyl dicyclohexyl methane, 3,5,3',5'-tetraethyl-4,4-diaminodicyclohexyl methane and 3,5,3',5'-tetraisopropyl-4,4'-diaminodicyclohexyl methane or 3,5,3'-trimethyldodecahydrodiphenyl 4,4'-diamine. It is also possible to use aliphatic diamines such as 1,12-diaminododecane or, preferably a partial amount of higher functional polyamines such as, for example, 1,5, 11-triaminoundecane, 4,4'-diamino-3,3'-dimethyl dicyclohexyl methane is particularly preferred.

In another preferred embodiment, said removal is carried out at a T between 80 and 180°C.

It is noted that said removal can consist of a) the action of nucleophilic groups or b) the application of a T between 80 and 180°C, or c) both a) and b).

In a further preferred embodiment, independently of using nucleophilic groups or a T between 80 and 180°C, this removal is carried out in the presence of a Sn- or Bi- catalyst or a combination thereof.

In a four aspect, the present invention relates to the use of the blocked isocyanate composition obtained according to the method of the second aspect of the invention, including all the embodiments thereof wherein the method is carried out without solvents or up to 50 wt% of organic solvents with respect to the whole composition, for manufacturing synthetic or artificial leather.

As people's living standards improve, people gradually pursue high-quality household products, leather products, demand is growing. With the increased awareness of animal protection, synthetic leather products gradually become the future trend and make possible great-looking and cheap products, which present good physical properties.

The conventional synthetic leather manufacturing process are divided into 2 groups: dry process (also called transfer coating method, using a release paper) and wet process (coagulation method with DMF).

These polyurethane systems (also known as high solid polyurethanes) are used in the dry manufacturing process when technical articles are desired for example: safety shoes, wall panels effect leather, dashboards and as a PVC substitute. High solids Polyurethanes have the advantage of being thermoplastic, while PVC is thermostable.

This technology could be developed just with a film or with a foam. Foam technology in PU high solids can be made only by chemical foaming using a blowing agent such as AC (azodicarbonamide). The blowing agent is decomposed by temperature and release one or more gases promoting the foamed polymer matrix.

In this process a thin film of water-based polyurethane called "skin" or "pre-skin" is applied over a release paper, which can have different prints and levels of gloss. After drying the polyurethane dispersion, a thicker film of high solids PU with crosslinking agent is applied above. After curing in the oven, an adhesive is applied which adheres this to a textile or another substrate like nonwoven, split leather...

Reactive coating is generally carried out by reacting NCO-polyurethanes containing blocked NCO-groups and substantially nonvolatile aliphatic and/or cycloaliphatic diamines, preferably alkyl-substituted dicyclohexyl methane diamines.

The present invention further relates to the use of the blocked isocyanate composition obtained according to the method of the second aspect of the invention wherein the method is carried out with water or a combination of water and a polar organic solvent as solvent, including all the embodiments thereof, in textile applications.

Water-based polyurethanes containing blocked isocyanate groups can be used in textile as crosslinking agents in dyeing and printing processes to improve colour fastness.

These water-based polyurethanes systems can offer in general the same properties as the ones in solvent and avoid the use of solvents that, for ecological reasons, legislations increasingly restrict.

Polyurethane systems can be divided into two groups:
- One component polyurethanes (1K): Reticulate by action of temperature, oxygen or radiation.
- Two-component polyurethanes (2K): Crosslinked by mixing the two components. The most commonly used crosslinking agents in the industry are the polyaziridines, but due to their toxicity they are increasingly being replaced by polyisocyanates, carbodiimides or melamines depending on the application.

One of the great advantages of blocking isocyanates is that it allows the development of isocyanate systems dispersed in water (1K), in a way that isocyanate is protected and then it does not react with water.

In the case of the 2K, the two components are mixed just before the application so the pot life is an important factor. When compare to 1K, this system shows many disadvantages: risk of wrong mix ratio, risk of overcoming the pot life, manipulating two toxics components. Nevertheless, it also has the advantage that as the crosslinker is not blocked, it is not necessary to heat and therefore, it is a cheaper process.

Depending on the application, one system or another one is used. In textile applications, 1K systems are used and the blocked isocyanate is used in the printing pastes to improve the fastness. These pastes consist of a formulation that includes water, ammonia, pigment, an acrylic resin that acts as a binder, a thickener and the fixing agent (blocked isocyanate).

The printing paste is applied on fabric by screen printing and then the fabric passes through an oven at approximately 150°C, depending on the blocking agent. At the de-blocking temperature, the isocyanate unblocks and thus can react with the hydroxyl groups of the cellulose in case of being cotton or with the amine groups of the wool protein. In this way, the colour is fixed and the wet and dry fastness are improved.

The following Examples are offered for illustrative purposes only and are not intended to limit the scope of the present invention in any way.

### EXAMPLES.

### Example 1:

### Synthesis

In a round-bottom flask, 4 g of NaHCO₃ were added over 30 mL of water. The mixture was stirred at room temperature and 1.6 g of hydroxylamine hydrochloride (NH₂OH·HCl) were added. Effervescence and complete dissolution were observed. Finally methyl levulinate was added and it was stirred at room temperature. The solution remained transparent. The reaction mixture was extracted three times with dichloromethane. The combined organic layers were dried over MgSO₄ and concentrated to provide the oxime of methyl levulinate. The product was analyzed by NMR and it was obtained that there was 93.7% of methyl levulinate oxime and 6.2% of methyl levulinate.

### Toxicity

Some first toxicity QSAR studies on the methyl levulinate oxime were carried out. QSAR (Quantitive Structure - activity relationship) are regression models, which relate a set of predictor variables.

Methyl (4E)-4-hydroxyiminopentanoate was analyzed in silico for toxicity using the Derek Nexus software in a number of bacterial and mammalian species (*Escherichia coli and Salmonella typhimurium* (bacteria); dog, guinea pig, hamster, rabbit and human (mammal); monkey (primate) and mouse and rat (rodent)) and no alerts were triggered for carcinogenicity in Derek Nexus (Derek KB 2018 1.1)

### Example 2:

The procedure was carried out as in example 1 but with more hydroxylamine and longer time. A molar ratio of methyl levulinate: hydroxylamine hydrochloride 1: 1,5 instead of 1:1.16 as in Example 1, was used.

In a round-bottom flask, 4 g of NaHCO₃ were added over 30 mL of water. The mixture was stirred at room temperature and 2.06 g of hydroxylamine hydrochloride (NH₂OH·HCl) were added. Effervescence and complete dissolution were observed. Finally methyl levulinate (2,577 g) was added and stirred for 3 hours at room temperature. The solutions remained transparent. The reaction mixture was extracted three times with dichloromethane. The combined organic layers were dried over MgSO₄ and concentrated to provide the oxime of methyl levulinate. (yield: 86,5%).

The product was analyzed by NMR and 100% of methyl levulinate oxime was obtained. Methyl levulinate oxime: 1H NMR (CDCl3, TMS, δ): 9.34 (1H, s, N-OH), 3.63 (3H, s, O-CH3), 2.6 (4H, m, CH2CH2), 1.84 (3H, s, C-CH3).

In the NMR spectrum it has been observed that the oxime has two isomers, sin (Z) and anti (E).

The ratio between the integrals of the signals corresponding to each isomer give a ratio of 1:3, Methyl (Z) -4 (hydroxymino) -pentanoate. - Methyl (E) -4 (hydroxymino) -pentanoate. It was also observed that this ratio increased with time because the isomer Z becomes E which is more stable.

### Comparative Example 3:

In a round-bottom flask, 5.9 g of NaHCO₃ were added over 34 mL of water. The mixture was stirred at room temperature and 5.0 g of hydroxylamine hydrochloride (NH₂OH·HCl) were added. Effervescence and complete dissolution were observed. Finally methyl piruvate was added and stirred at room temperature. The solutions remained transparent. The reaction mixture was extracted three times with dichloromethane. The combined organic layers were dried over MgSO₄ and concentrated to provide the oxime of methyl pyruvate.
Yield of 85% was obtained.
The product was analyzed by RMN and 100% of methyl pyruvate oxime was obtained. Methyl pyruvate oxime: 1H NMR (CDCl3, TMS, δ): 2.12 (3H, s, CH₃-C), 3.86 (3H, s, O-CH₃).

### Production of the blocked NCO polyurethane:

### Example 4:

In a 1L glass reactor flask equipped with a stirring rod, totally hermetic and with nitrogen atmosphere, 560 g of polyol were charged. After that, 85 g of TDI were charged with a funnel. The mixture was heated to 70°C and the temperature was kept 3 hours. After checking that %NCO was as expected, it was cooled down and 55 g of butanone oxime were added. Exothermic reaction was observed. The agitation was maintain for one hour and after that it was checked that all NCO groups were blocked by IR spectroscopy.
The product obtained had a viscosity of aprox. 8000 cP at 35 °C

### Example 5:

In a 1L glass reactor flask equipped with a stirring rod, totally hermetic and with nitrogen atmosphere, 533 g of polyol were charged. After that, 81 g of TDI were charged with a funnel. The mixture was heated to 70°C and the temperature was kept 3 hours. After checking that %NCO was as expected, it was cooled down and 85 g of methyl levulinate oxime synthesized as in Example 2 were added. Exothermic reaction was observed. The agitation was maintain for one hour and after that it was checked that all NCO groups were blocked by IR spectroscopy.
The product obtained had a viscosity of aprox. 7000 cP at 35 °C

### Comparative Example 6:

The same procedure as in examples 4 and 5 was carried out, except for that, after cooling down, the stoichiometric quantity to block all the NCO groups was added. Exothermic reaction was observed. The agitation was maintained for one hour and after that it was checked that all NCO groups were blocked by IR spectroscopy.

The product obtained had a viscosity of about. 8,000 cP at 35 °C

### Application of the blocked polyurethane:

### Example 7:

At room temperature 100 g of blocked polyurethane synthesized in Example 4 were mixed with 10.6 g of 4,4'-diamino-3,3'-dimethyldicyclohexylmethane. A 250 µm film was applied over a transfer paper and after 3 minutes at 160°C a completely crosslinked film was obtained. This film had a 100% module of 2.6 MPa and 300% module 4.9 MPa.

### Example 8:

At room temperature 100 g of blocked polyurethane synthesized in Example 5 were mixed with 10,1 g of 4,4'-diamino-3,3'-dimethyldicyclohexylmethane. A 250 µm film was applied over a transfer paper and after 3 minutes at 160°C a completely crosslinked film was obtained. This film had a 100% module of 2.7 Mpa and 300% module 5.0 MPa

### Comparative Example 9:

At room temperature 100 g of blocked polyurethane synthesized in Example 6 were mixed with 10.3 g of 4,4'-diamino-3,3'-dimethyldicyclohexylmethane. Immediately after the amine was incorporated over the blocked polyurethane, completely jellification was observed. This reaction was studied with another amines such as isophorone diamine and the same results were obtained.

This reaction was studied by NMR using model reactions which were simpler than these ones in order to interpret the NMR spectra more easily. It was obtained that the blocked isocyanate reacts through the oxime with the amine and does not release the oxime.

The oxime reacts with the amine forming an amide and liberating methanol.
Due to this fact, the oxime of methyl pyruvate cannot be used in applications in which amines are used.

## Claims

1. A blocking agent for a blocked isocyanate composition consisting of an oxime of an ester of gamma-cetoacid,
wherein this ester is formed with an optionally substituted alkyl moiety of linear or branched chain, and
wherein said blocking agent blocks an isocyanate group by forming an urethane group.

2. The blocking agent of claim 1, wherein said gamma-cetoacid is levulinic acid.

3. The blocking agent of claim 1 or 2, wherein said alkyl is selected from methyl, ethyl, propyl, butyl, pentyl and hexyl.

4. A method of manufacturing a blocked isocyanate composition comprising the steps of:
c) reacting at least one isocyanate compound with at least one polyol compound for forming urethane groups;
d) adding the blocking agent as defined according to any of claims 1 to 3 to block free isocyanates compounds.

5. The method according to claim 4, wherein the blocking agent is added together with at least one of another alcohol-, phenol-, amine-, imidazole-, pyrazole-, malonic esters-, caprolactame- and oxime-type blocking agent.

6. The method according to any of claims 4 or 5, wherein the blocking agent is present in a stoichiometric ratio with respect to the isocyanate compound.

7. The method according to any of claims 4 to 6, which is carried out without solvents or up to 50 wt% of organic solvents with respect to the whole composition.

8. The method according to any of claims 4 to 6, which is carried out with water or a combination of water and a polar organic solvent as solvent.

9. A method of de-blocking a blocked isocyanate composition comprising the step of removing the blocking agent as defined according to any of claims 1 to 3.

10. The method according to claim 9, wherein said removal is carried out:
a) by the action of nucleophilic groups; or
b) at a temperature between 80 and 180 °C; or
c) by a combination of a) and b).

11. The method according to claim 9, wherein said removal is carried out in the presence of a Sn- or Bi- catalyst or a combination thereof.

12. The method according to claim 10 or 11, wherein said nucleophilic groups are alcohol- or amine-type nucleophilic groups.

13. Use of the blocked isocyanate composition obtained according to any of claims 4 to 7, for manufacturing synthetic or artificial leather.

14. Use of the blocked isocyanate composition obtained according to any of claims 4 to 6 and 8, in textile applications.
